# DEMANDE DE BREVET EUROPEEN

(11) **EP 0 676 320 A1**
(43) Date de publication de la demande: **11.10.1995**
(21) Numéro de dépôt: 95400757.1
(22) Date de dépôt: 05.04.1995
(51) Int. Cl.: B61D 17/20, B60D 5/00

(54) **Nacelle pouvant être associée à un ou deux véhicules ferroviaires**

(30) Priorité: 07.04.1994 FR 9404099
(71) Demandeur: SOCIETE NATIONALE DES CHEMINS DE FER FRANCAIS (Etablissement Public, Industriel et Commercial), F-75009 Paris (FR)
(72) Inventeur: Bernard, Patrice, F-75009 Paris (FR)

(57) **Abrégé**

"Nacelle" susceptible de porter des équipements voire du personnel, caractérisée en ce qu'elle peut se trouver incorporée dans une rame ferroviaire entre deux véhicules, qu'elle peut également se trouver associée à un seul véhicule ferroviaire (engin haut-le-pied ou extrémité d'une rame), qu'elle n'a d'autre contact mécanique avec ce ou ces véhicules que leurs classiques organes d'attelage ou de choc et qu'elle satisfait aux exigences usuelles de résistance aux efforts de traction et de compression, y compris les chocs, que, dans le cas général, elle n'est pas équipée de roues ferroviaires permettant son appui sur une voie ferrée, qu'en outre elle peut, d'une façon facultative être dotée de jambes télescopiques portant des galets de roulement lui permettant de circuler de façon autonome ou ce qui constitue le seul cas où elle est équipée de roues ferroviaires, être dotée d'un bogie ou d'un bissel sur lequel elle peut, dans certaines circonstances, prendre un appui partiel ou total.

## Description

### PREAMBULE

Le domaine de l'invention s'apparente à celui des véhicules ferroviaires, encore que l'invention concerne une "nacelle" qui, si elle est destinée à une exploitation ferroviaire et dispose d'attelages et d'organes de choc aux normes ferroviaires, est en général dépourvue de roues ferroviaires et n'est donc pas à proprement parler un véhicule. A défaut d'un meilleur vocable, on choisit celui de nacelle parce qu'il évoque le panier ou la coque que l'on fixait aux aérostats pour contenir les équipements ou les aéronautes.

### ETAT DE LA TECHNIQUE

Les équipements ferroviaires embarqués, tels que ceux nécessaires au contrôle-commande de la marche des trains (protection des trains, signalisation, commande de la marche, etc.) se trouvent le plus souvent portés par les engins de traction. Toutefois, dans le cas de rames indéformables, il arrive qu'ils soient installés ailleurs dans la rame.

Ceci soulève des difficultés d'implantation, surtout lorsque ces équipements viennent s'ajouter à d'autres équipements déjà installés. Il faut trouver de la place non seulement à l'intérieur de l'engin mais aussi le plus souvent sous la caisse et, de préférence, dans l'axe, de façon à loger les antennes diverses de plus en plus souvent nécessaires pour des communications avec des équipements se trouvant implantés dans la voie ou en faisant partie. Outre cette difficulté à trouver de la place, l'installation des équipements suppose de ramener l'engin en atelier et présente souvent une dépense importante. De plus, dans le cas d'implantation sur les engins, le nombre d'équipements est égal à celui des engins. Enfin, il est coûteux, voire décourageant, d'équiper un engin obsolescent dont on sait qu'il lui reste peu de temps avant la réforme.

Une solution alternative consisterait bien sûr à installer les équipements dans un véhicule que l'on associerait à l'engin de traction. Ceci peut être envisagé avec les trains de voyageurs, en équipant, par exemple, une voiture de première classe parce que la plupart des trains en comptent au moins une. Ceci peut également être envisagé en associant à l'engin de traction un véhicule auxiliaire, un peu à la manière des tenders pour les locomotives à vapeur. Cette solution présente toutefois des inconvénients. Pour être assuré qu'un essieu présente bien un shunt électrique entre les files de rails pour des équipements de localisation tels que les circuits de voie, on exige, en général, une charge à l'essieu importante. Pour que le véhicule ait un bon comportement à vitesse relativement élevée, on exige qu'il comporte deux bogies et que son empattement, donc sa longueur, soient importants. Un tel véhicule auxiliaire se caractériserait donc par une masse, une longueur (pouvant être gênante notamment dans le cas de garages ou de quais courts) et un prix notables. On voit que ces inconvénients résultent principalement de l'obligation de prévoir des roues ferroviaires ou en tous les cas deux bogies.

Le but de l'invention est de fournir un moyen d'associer à un train les équipements qui lui sont nécessaires sans devoir les implanter dans l'engin de traction ni obliger à associer à ce train un véhicule ferroviaire auxiliaire traditionnel. Un but annexe est de gérer un parc d'engins de traction avec un nombre inférieur d'équipements, en profitant du fait que tous les engins ne sont pas opérationnels en même temps ou que certains d'entre eux sont associés en "unités multiples". En particulier, dans le cas où seules certaines lignes exigent que les matériels qui les empruntent comportent certains équipements, ce but annexe est d'associer à la demande l'équipement exigé aux engins de traction non équipés qui se présentent à l'entrée d'une de ces lignes et de le retirer à la sortie.

L'objet de l'invention est une "nacelle", capable de recevoir des équipements susceptibles d'être associés à un engin de traction soit directement dans le cas d'un engin circulant "haut-le-pied" ou d'un positionnement en tête ou en queue de rame - on parle alors de configuration "haut-le-pied" - soit en se trouvant incorporée entre deux véhicules d'une rame, l'un de ces véhicules pouvant être l'engin de traction - on parle dans ce cas de "configuration en rame" -, ou encore, mais ceci est facultatif, capable de se déplacer de façon autonome dans un site tel qu'un dépôt de locomotives ou une zone de gare. Cette nacelle pouvant être associée à un ou deux véhicules ferroviaires est capable de remplir d'autres fonctions. L'une d'elles peut être de servir de support à une cabine de conduite déportée.

### DESCRIPTION DE L'INVENTION

L'invention sera mieux comprise à la lecture d'un procédé de réalisation préférentiel et de diverses variantes de ce procédé, indiqués pour illustrer l'invention et qui n'en restreignent en aucune façon la portée, celle-là pouvant être réalisée selon tout autre procédé équivalent qui apparaîtra approprié à l'homme de l'art.

La description du procédé s'appuie sur les figures suivantes :
- la figure 1 donne une vue globale du châssis de la nacelle pouvant être incorporée dans une rame ou associée à un engin de traction haut-le-pied. Ne sont représentés sur cette figure ni les organes d'attelage, ni les organes d'appui et de choc, ni les organes permettant un déplacement autonome, ni les équipements susceptibles d'être montés sur la nacelle;
- la figure 2 représente les organes d'attelage;
- la figure 3 représente les organes d'appui et de choc;
- la figure 4 donne un détail des appuis;

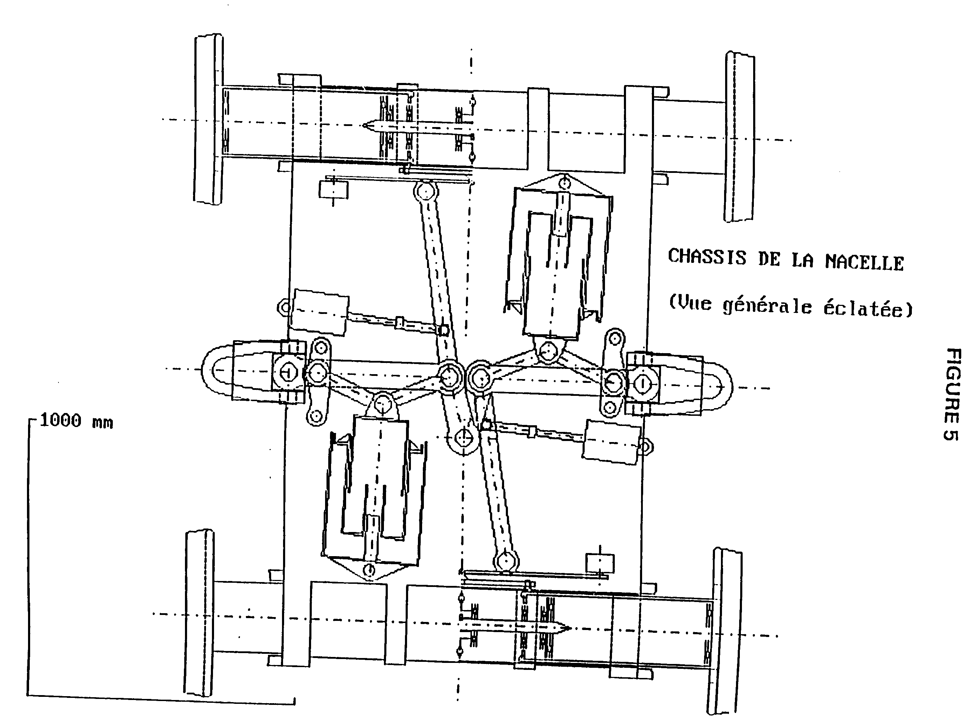

- la figure 5 représente une vue générale éclatée du dessus du châssis, intégrant les organes d'attelage et les organes d'appui et de choc;
- la figure 6 représente une variante de nacelle caractérisée en ce qu'elle n'est pas prévue pour la configuration "en rame" mais peut quand même avoir la capacité d'absorber des chocs.

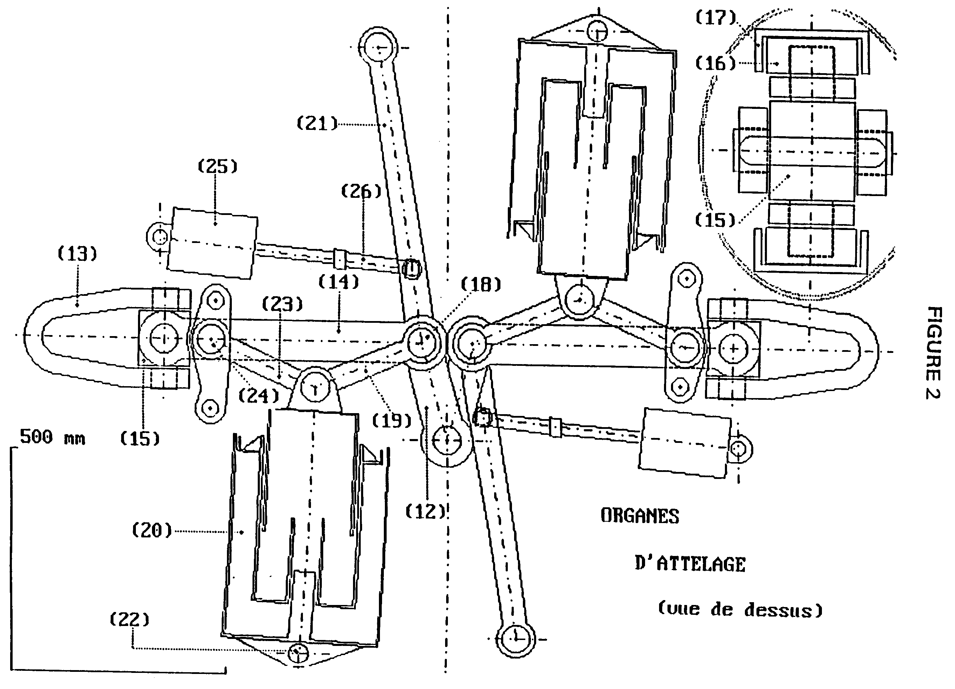

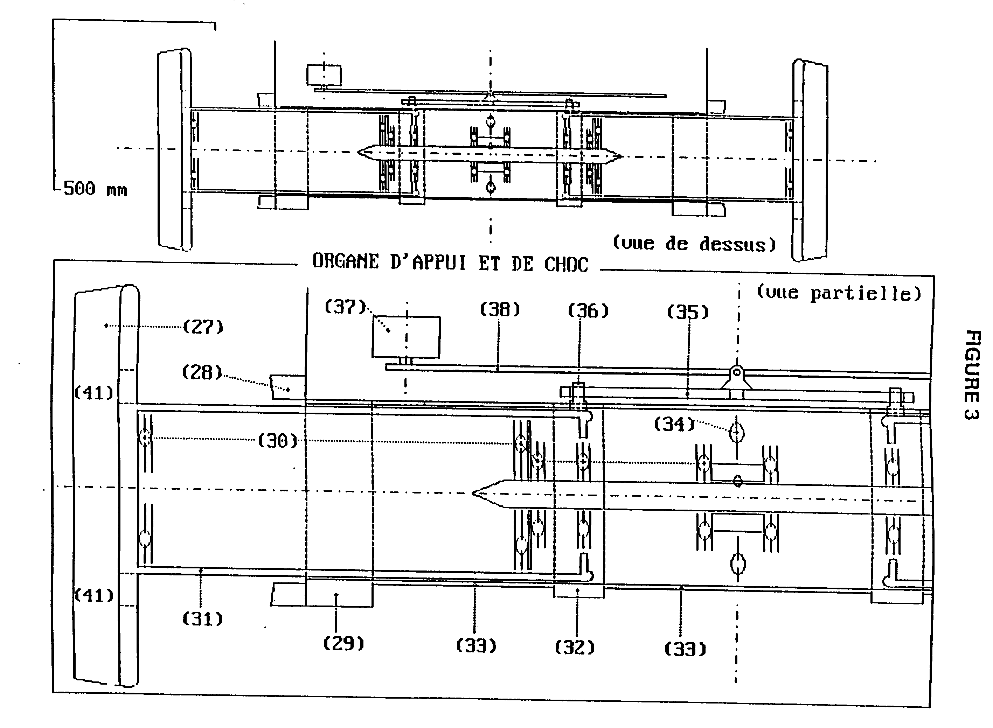

Le châssis a essentiellement une fonction de support et de résistance à la déformation sous effort. Il ne subit ni les efforts de compression et de choc exigés des véhicules ferroviaires (usuellement 2000 kN), ceux-ci étant repris par les organes d'appui et de choc représentés figure 3, ni les efforts de traction (valeur maximale habituellement de 900 kN, et de 1300 kN dans le cas d'attelage renforcé), ceux-ci étant repris par les organes d'attelage représentés figure 2. Pour fixer les idées, sa longueur peut être de 1400 mm et sa largeur de 2350 mm ; son poids peut être de l'ordre d'une tonne (non compris un poids de l'ordre de 500 kilos pour les organes d'appui et de choc, ni le poids, plus faible, des organes d'attelage). Afin de pouvoir se dispenser des organes permettant un déplacement autonome ou de faciliter son incorporation dans une rame sans manoeuvre complexe, il est doté de passages de fourches qui permettent sa manutention par un simple chariot élévateur.

Lorsqu'il se trouve incorporé dans une rame, il repose à la fois sur les organes d'attelage et sur des butées faisant partie des organes d'appui et de choc et susceptibles d'entrer en contact avec le bord supérieur des plateaux de tampon des véhicules encadrants, dans une proportion qui varie notamment selon les véhicules qui l'encadrent, le dévers de la voie et l'angle de roulis relatif de ces véhicules, et l'effort de traction ou de compression de la rame.

Lorsqu'il se trouve arrimé à un véhicule haut-le-pied (locomotive, locotracteur ou autorail, par exemple), il repose sur les tampons de ce véhicule par les butées déjà citées, s'appuie sur chaque plateau de tampon par quatre plots, qui n'interviennent pas lorsque la nacelle est incorporée à une rame et dont la nature est précisée plus loin, qui assurent le maintien d'une inclinaison stable. Un effort d'appui sur les tampons est assuré par les organes d'attelage, un vérin élastique assurant une valeur minimum à cet effort. La valeur de cet effort est telle que les contraintes mécaniques internes aux plateaux et aux autres composants des tampons restent dans les limites habituelles.

Lorsqu'elle se déplace de façon autonome, la nacelle déploie, grâce à des vérins, des jambes auxquelles sont fixées des galets à boudin, dont certains motorisés, qui viennent prendre appui sur les rails.

La transition entre les diverses configurations, en rame, haut-le-pied et autonome, est décrite plus loin.

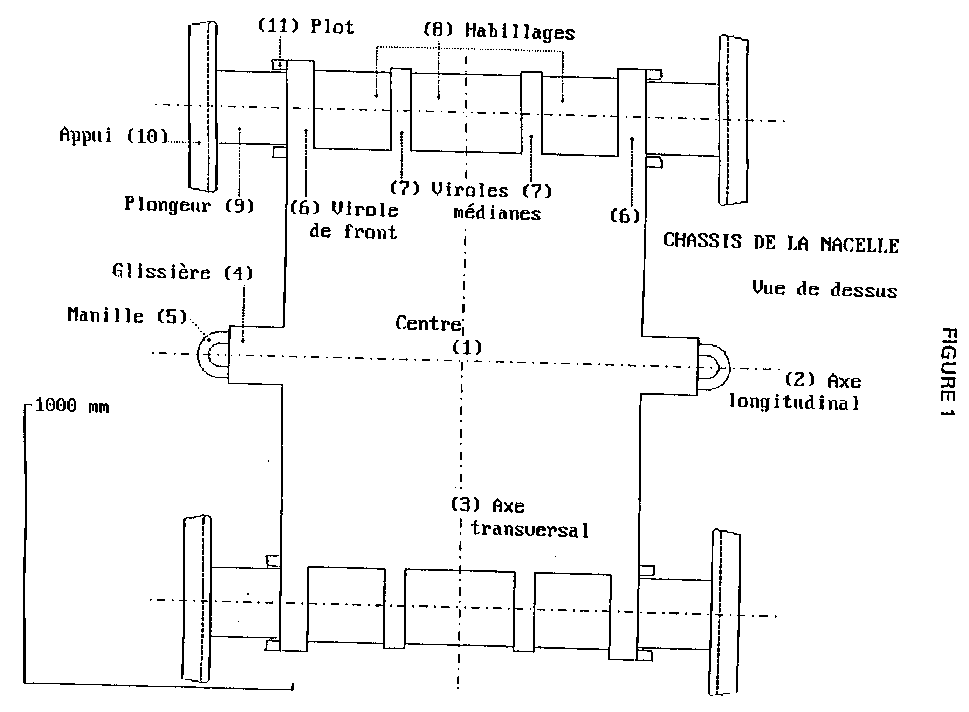

On voit sur la figure 1 le châssis vu de dessus. Celui-ci a essentiellement une fonction de support et de résistance à la déformation sous effort. Il ne subit ni les efforts de compression et de choc, ni les efforts de traction. Il est dimensionné pour subir certaines composantes transversales des efforts précédents ainsi que les efforts internes engendrés par le comportement propre des ensembles de la nacelle. Il s'agit d'un ensemble rigide mécano-soudé. Afin de pouvoir se dispenser des organes permettant un déplacement autonome ou de faciliter son incorporation dans une rame sans manoeuvre complexe, le châssis est doté de passages de fourches qui permettent sa manutention par un simple chariot élévateur.

La nacelle possède un centre de symétrie (1) et admet les axes longitudinal (2) (parallèle à la voie) et transversal (3) comme axes de symétrie. On appellera fronts les faces de la nacelle perpendiculaires à la voie et bords les faces parallèles à la voie. Sur chaque front, dans l'axe longitudinal, est fixée une glissière (4) dans laquelle coulisse une extrémité de l'attelage équipée d'une manille (5) destinée à s'engager dans le crochet de la locomotive ou d'un autre véhicule.

Sur chaque bord est fixé un ensemble de quatre viroles [une sur chaque front (6) et deux médianes (7)] et d'habillages inter-viroles. Cet ensemble joue le rôle d'un double boisseau de tampon d'axe parallèle à l'axe longitudinal.

Dans chacun de ces "boisseaux" coulisse un organe d'appui de choc, qui comporte à chaque extrémité un plongeur (9) auquel est fixé un appui (10). Cet appui a entre autres fonctions celle d'un plateau de tampon. Chacune des deux viroles situées sur un front porte quatre plots d'appui (11), qui sont opérationnels en configuration haut-le-pied.

Sous le châssis sont fixés, vers les fronts et approximativement à la verticale des rails, quatre boisseaux, dans chacun desquels coulisse une jambe télescopique, l'ensemble étant opérationnel en configuration autonome. On rappelle que ceci est facultatif; le châssis comporte en effet des passages de fourche permettant sa manutention dans une zone de gare, un dépôt ou un atelier par des chariots élévateurs.

Sous le châssis, vers les bords, sont montés des boîtiers suspendus par des amortisseurs, abritant des batteries d'accumulateurs nécessaires d'une part, à l'exploitation de la nacelle, notamment lorsqu'elle doit se déplacer en configuration autonome et d'autre part, aux équipements d'instrumentation, de traitement d'information, voire de transmission. Les équipements d'instrumentation peuvent être abrités dans le volume central de l'espace sous le châssis.

Sur le châssis est montée en quatre points, chacun équipé d'un élément de suspension, la cellule abritant les équipements de traitement d'information et de transmission. Cette cellule peut, le cas échéant, être une cabine de conduite utilisant pour la vision des écrans recevant les images prises par des caméras de télévision ayant une vue vers l'avant.

Sont encore fixés au châssis, les auxiliaires ferroviaires (conduites pneumatiques, câblots électriques) et les auxiliaires nécessaires à l'exploitation de la nacelle.

La figure 2 représente les organes d'attelage.

L'attelage est constitué morphologiquement d'une ligne de traction réunissant des manilles d'attelage. A cette ligne sont associés deux ressorts tendeurs.

En configuration haut-le-pied, l'attelage a pour fonction d'amarrer le châssis à la locomotive et de produire sur le crochet de traction de la locomotive une force de traction de l'ordre de 120 à 150 kN afin de maintenir en position d'équilibre la nacelle qui se trouve en porte-à-faux à l'extrémité de la locomotive. Lorsqu'elle se trouve en configuration "en rame", la nacelle peut, par suite d'une rupture d'attelage, se retrouver spontanément dans une configuration analogue à la configuration haut-le-pied, mais amarrée, selon le cas, à la locomotive ou au véhicule jusque là remorqué.

En configuration en rame, l'attelage a deux fonctions. La première est d'assurer, quels que soient les efforts externes, une force de traction minimale de 120 à 150 kN sur le crochet de la locomotive et sur celui du véhicule remorqué, particulièrement dans les cas où locomotive, nacelle et véhicule remorqué sont en compression ou en choc (force de 2000 kN) ou bien où la locomotive développe une force de traction faible ou nulle. Lorsque la locomotive, la nacelle et le reste de la rame sont soumis à une force dynamique de traction élevée (pouvant atteindre 1300 kN), la force de traction est pratiquement égale à cette force. La deuxième fonction de l'attelage est de garantir, par une extensibilité limitée, le contact permanent entre les appuis du châssis et les plateaux correspondants des tampons de la locomotive et du véhicule remorqué, et cela que la voie soit rectiligne, en courbe ou en courbe et contre-courbe,- y compris pour une élongation maximale de l'attelage.

L'attelage est constitué de deux sous-ensembles identiques réunis tête-bêche par quatre bielles (12). Chaque sous-ensemble possède, à son extrémité externe, une manille (13), destinée à s'engager dans le crochet de la locomotive ou d'un autre véhicule. Cette manille est couplée à deux bielles (14), par l'intermédiaire d'une croix (15) jouant le rôle de cardan. Les tourillons d'axe vertical de cette croix dont un agrandissement est représenté dans l'encadré de la figure 2 reçoivent chacun un chapeau (16) servant de coussinet pour coulisser librement dans la glissière (17) du châssis. Celle-ci est constituée d'un élément supérieur et d'un élément inférieur. Les extrémités des deux bielles (14) opposées à la manille sont couplées par un axe (18) à deux des quatre bielles (12), à une bielle (19) couplée à un bloc ressort (20) et à deux bielles (21) permettant à l'axe (18) de se déplacer sensiblement sur l'axe longitudinal de la nacelle lors de mouvements du sous-ensemble d'attelage.

Le ressort-tendeur a pour fonction de produire sur le sous-ensemble d'attelage auquel il est associé un effort de rappel de 120 à 150 kN vers le centre de la nacelle. Ce ressort-tendeur comporte le bloc-ressort (20) constitué d'un empilement à deux étages de galettes élastomères, articulé autour d'un axe (22), et deux bielles (19 et 23), l'une s'appuyant sur un axe (24) solidaire du châssis et l'autre poussant sur l'axe (18).

Pour des forces supérieures à la force de rappel, l'attelage atteint une longueur prédéterminée et devient mécaniquement rigide. Il supporte ainsi des efforts allant jusqu'à 1300 kN.

Un vérin hydraulique (25) couplé aux bielles (21) par une chaîne (26) a pour mission de pousser vers l'extérieur le sous-ensemble d'attelage, afin de permettre d'effectuer l'attelage de la nacelle à la locomotive ou à un véhicule remorqué.

La figure 3 représente les organes d'appui et de choc.

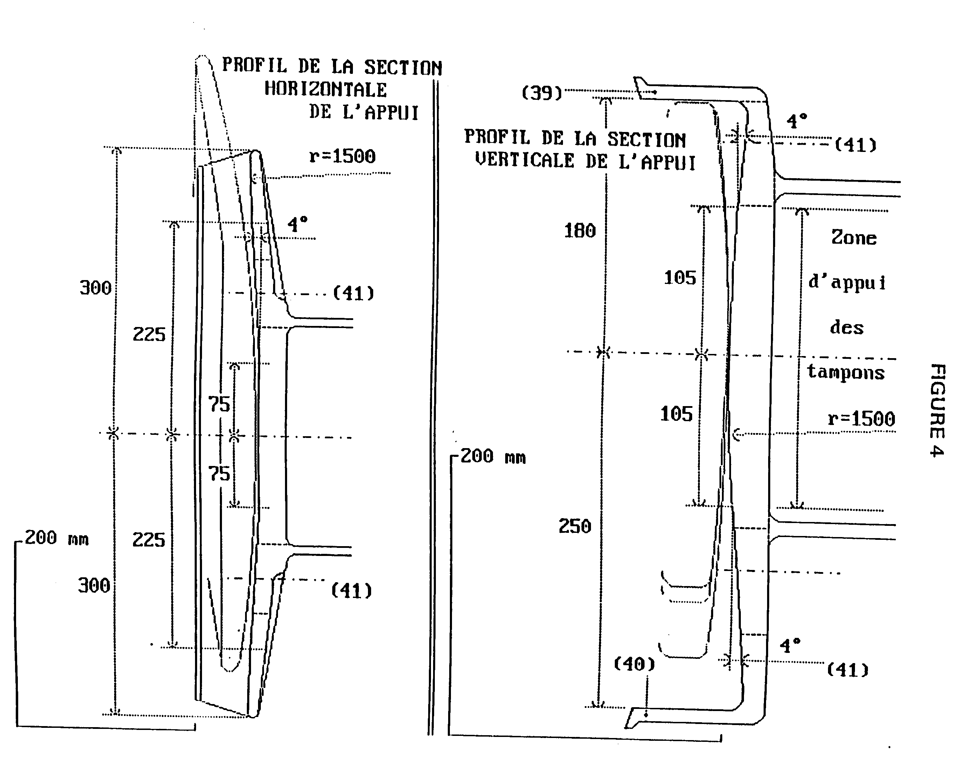

En configuration en rame, chaque organe d'appui et de choc a deux fonctions. La première est de jouer le rôle qu'auraient deux tampons tête-bêche s'appuyant sur les tampons de la locomotive et du véhicule remorqué, et donc de prendre tous les efforts de compression de la locomotive et du véhicule remorqué, dont les chocs (1000 kN, par exemple). La deuxième mission est, grâce au profil particulier des appuis (décrits sur la figure 4), de supporter le poids de la nacelle, totalement ou partiellement selon la situation dans laquelle elle se trouve, d'assurer la stabilité de la nacelle en roulis et d'assurer sa stabilité en tangage, notamment dans les cas de chocs importants, qui pourraient donner naissance à des efforts parasites tendant à faire glisser les appuis sur les tampons.

Chaque organe d'appui et de choc est composé de deux sous-ensembles identiques montés tête-bêche. Chacun est télescopique et doté d'un ressort constitué d'un empilement de galettes élastomères (30), à la façon des tampons ferroviaires. Il comporte donc un plongeur cylindrique (31) coulissant dans l'équivalent d'un boisseau, constitué des viroles de front (6 ou 29), des viroles médianes (7 ou 32) et des habillages associés (8 ou 33). L'extrémité du plongeur situé entre les viroles médianes est profilée pour entrer en contact avec son homologue de l'autre sous-ensemble. Avant d'entrer en contact, les boisseaux subissent un ralentissement à l'aide d'une galette élastomère (34) semblable à celles des tampons de choc. Quand les deux plongeurs sont en contact, ils constituent la structure résistant aux chocs (1000 kN, par exemple). Une barre d'accouplement (35) à deux rainures longitudinales réunit les deux plongeurs à l'aide d'un ergot (36) fixé sur chacun des plongeurs. La combinaison d'ergots et barre limite la course relative des plongeurs, afin qu'ils restent suffisamment engagés dans le boisseau, sans s'opposer au déplacement longitudinal des deux sous-ensembles d'appui et de choc, permettant ainsi aux plots de saillir au travers des appuis pour réaliser la configuration haut-le-pied. Ce déplacement est effectué dans un sens ou dans l'autre, à l'aide d'un moteur hydraulique (37), entraînant une chaîne attelée à la barre d'accouplement (38).

La figure 4 donne un détail des appuis.

A l'extrémité externe de chaque plongeur est fixé un appui. Son profil est décrit dans ce qui suit, en distinguant profils vertical et horizontal.

Le profil de la coupe verticale passant par l'axe du sous-ensemble est en sigma majuscule. Des butées haute (39) et basse (40) limitent le déplacement vertical de l'appui qui vient en contact avec le plateau du tampon. La distance entre les butées est prévue pour accepter tous les types de tampon et le débattement dû au dévers et au roulis. D'une amplitude de 105 mm de part et d'autre de l'axe longitudinal, le bombé central, de courbure compatible avec les normes, suivi d'une droite inclinée de 86 degrés par rapport à l'axe longitudinal, est tel que le point de contact avec le plateau de tampon n'est pas très éloigné de l'axe, même si la dénivellation entre locomotive et véhicule est à son maximum.

Le profil de la coupe horizontale passant par l'axe du sous-ensemble est en double esse. Il comporte, de part et d'autre de l'axe longitudinal, une ligne droite de 75 mm perpendiculaire à cet axe, suivie d'une ligne droite inclinée de 86 degrés par rapport à ce même axe, sur (225-75) : 2, soit 75 mm, se raccordant à une courbure de 1500 mm de rayon. Le creux au centre du profil ne donne pas naissance à une force de centrage significative; il crée toutefois une tendance au centrage plutôt qu'à l'évasion. La zone de courbure aux extrémités du profil permet d'avoir une surface de contact tangente au plateau de tampon, mais n'intervient qu'au passage sur des voies en courbe et contre-courbe prononcées. Sur des voies en courbe, les appuis et les tampons restent pratiquement en contact centré. Le profil relativement plat et perpendiculaire à l'axe longitudinal de la nacelle évite le risque d'éjection de la nacelle vers l'extérieur dans le cas d'une forte compression en courbe.

De plus, l'appui est percé de quatre orifices (41), permettant aux plots de faire saillie au travers de cet appui dans la configuration haut-le-pied.

A leur extrémité inférieure les jambes télescopiques, non représentées, portent chacune un galet (d'un diamètre de l'ordre de 200 mm) venant en position basse prendre appui sur les rails. Deux des quatre galets sont motorisés. Chaque jambe coulisse dans son boisseau, à l'aide d'un vérin hydraulique qui tend à faire descendre le galet et aussi à l'aide d'un ressort concentrique au vérin, qui tend à le faire remonter. Au repos, les galets se situent dans le gabarit des véhicules ferroviaires. Des moteurs associés à deux d'entre eux permettent un déplacement à faible vitesse. Aucune suspension n'est nécessaire en raison de la lenteur des déplacements.

En option, la nacelle est capable de mettre en position sur les rails deux roues indépendantes ou de préférence un essieu non motorisé et non freiné permettant une mesure de la vitesse en configuration haut-le-pied ou incorporé dans une rame par simple mesure de la vitesse de rotation de ces roues. Afin de pouvoir rester sur les rails dans une courbe, cet essieu (ou ces roues) dispose d'un degré de liberté transversal. Afin de ne pas constituer un risque de déraillement pour le train en cas d'avarie, cet essieu peut être réalisé en matière plastique.

A titre facultatif, la nacelle peut servir de support à une cabine de conduite déportée. Le brevet français N° 93/05278 décrit l'utilisation de caméras de télévision et de moniteurs reliés par les organes de transmission appropriés qui permet de conduire un train ou un engin à partir d'une position autre que la tête du convoi. Il y est cité comme possibilité d'implantation un "module" associé à un engin de traction ou à une rame. La nacelle de I'invention est apte à cette utilisation. Il faut pour cela lui adjoindre les moniteurs évoqués ainsi que les organes que l'on rencontre habituellement dans une cabine dite de réversibilité (située d'ordinaire en tête de la première voiture d'une rame lorsque celle-ci circule dans un sens tel que l'engin de traction se retrouve en queue), c'est-à-dire, essentiellement un pupitre de commande.

On va maintenant décrire la façon de passer d'une configuration à une autre, d'abord dans le cas où la nacelle est équipée de jambes télescopiques et de galets lui permettant de se déplacer de façon autonome, et ensuite dans le cas où sa manutention est assurée par un chariot élévateur à fourches.

On supposera comme situation initiale un déplacement autonome. La nacelle s'approche de la locomotive en vue de s'atteler à elle en mode haut-le-pied. Des boutons de commande sont disponibles sur chaque côté de la nacelle. Certaines des actions qui vont être décrites peuvent être enchaînées de façon automatique mais on supposera ici qu'elles ne le sont pas. Avant le contact, l'agent qui effectue l'attelage commande l'enfoncement complet des organes d'appui et de choc du côté de la locomotive de façon à laisser saillir les plots d'appui. On rappelle que cette commande est effectuée par un moteur hydraulique (37), entraînant une chaîne attelée à la barre d'accouplement (38). Grâce au vérin hydraulique (25), couplé aux bielles (21) par la chaîne (26), il commande également la sortie maximale de la manille, ainsi que par l'armement d'un dispositif le maintien en position relevée de celle-ci. Arrivé au contact, l'agent provoque la retombée par gravité de la manille sur le crochet. Dans le cas général, la manille ne tombe pas directement dans l'encoche de ce dernier. L'agent commande alors la mise hors pression du vérin hydraulique (25). Le ressort (20) assure la rentrée de la manille, qui au cours de ce mouvement tombe spontanément dans l'encoche du crochet. L'attelage mécanique est alors terminé. Il reste à l'agent à procéder aux opérations usuelles de connexion des liaisons pneumatiques et éventuellement électriques puis, par mise hors pression des vérins des jambes télescopiques, à remonter celles-ci à l'intérieur du gabarit du matériel roulant.

La procédure d'attelage du couple constitué par la nacelle et l'engin de traction au véhicule remorqué (mais on peut préférer commencer par atteler la nacelle au véhicule) s'opère de la façon suivante. L'agent provoque la sortie de la manille située du côté du véhicule et arme son maintien en position soulevée. L'engin de traction appuie alors la nacelle contre le véhicule, avec une poussée de l'ordre de 150 kN, comprimant ainsi les appuis, jusqu'à la butée, et les tampons. L'agent libère la manille et provoque sa rentrée dans la nacelle, la faisant ainsi tomber dans l'encoche du crochet. Il procède alors aux opérations usuelles de connexion.

Le dételage du véhicule (en supposant que l'on commence par lui) s'opère de la façon suivante : l'agent de conduite de l'engin de traction tend l'attelage de l'engin à la nacelle et celui de la nacelle au véhicule remorqué au maximum possible, en maintenant freinés tous les véhicules remorqués. Cette action a pour but, en faisant jouer au maximum toutes les forces de rappel tout en réduisant les forces freinantes, de mettre la nacelle en position à peu près centrée. L'engin cesse alors d'exercer toute traction. L'agent assurant le dételage procède alors aux opérations de déconnexion des liaisons pneumatiques et éventuellement électriques. Puis il arme le dispositif de soulèvement de la manille, côté véhicule. Toutefois, la tension qui existe sur l'attelage fait que la manille est empêchée de se soulever par le bec du crochet. L'engin de traction exerce alors une poussée de l'ordre de 150 kN, qui a pour effet de comprimer les appuis jusqu'à leur butée et les tampons. L'agent commande alors la sortie de la manille par l'action du vérin hydraulique. Au fur et à mesure que celle-ci avance vers le véhicule, le dispositif de soulèvement de la manille la fait glisser sur le bec du crochet, jusqu'à ce qu'elle lui échappe et se mette en position relevée. L'engin de traction s'éloigne alors avec la nacelle. L'agent désarme le dispositif de soulèvement et met hors pression le vérin hydraulique qui maintenait la manille sortie.

Pour dételer la nacelle se trouvant dans une configuration haut-le-pied et la mettre en configuration autonome, l'agent procède de la façon suivante. Il commande, au moyen de la pompe et des vérins hydrauliques des jambes télescopiques, la descente des galets sur les rails et le soulèvement du module, dans la mesure autorisée par le frottement des organes d'appui contre les tampons. Il procède à la déconnexion des liaisons pneumatiques et éventuellement électriques. Il arme le dispositif de soulèvement de la manille, commande la sortie de la manille, qui s'échappe du crochet. La nacelle s'écarte alors par ses propres moyens et l'agent désarme la pompe et le vérin du sous-ensemble d'attelage.

Dans le cas d'une manutention par un chariot élévateur à fourches, surtout si celui-ci est capable d'assurer un certain déplacement latéral de sa charge, les opérations peuvent être similaires, à la différence près qu'il n'y a pas à s'occuper du mouvement des jambes télescopiques. On peut toutefois s'efforcer de rendre la manoeuvre plus rapide, en automatisant certaines des fonctions et en laissant à l'agent comme seules tâches manuelles à effectuer, la connexion et la déconnexion des liaisons. On va décrire une des solutions possibles pour automatiser les opérations, en prenant le cas de l'arrivée d'un train et de l'enlèvement de la nacelle puis celui de l'inclusion de la nacelle entre l'engin de traction et le premier véhicule remorqué.

Pour le dételage, le conducteur arrête son train puis, maintenant sa rame freinée, exerce une légère traction. Le cariste introduit les fourches de son chariot. Les passages de fourche sont munis de capteurs sur chaque bord, qui détectent la présence des fourches. Lorsque le fond est atteint, ceci provoque des deux côtés la sortie des manilles et la tentative de leur relèvement. Lorsque la manille est suffisamment sortie, elle échappe au bec du crochet et se relève effectivement. Le cariste commande alors le soulèvement de la nacelle et, vainquant les efforts de frottement des tampons, la soulève effectivement et la retire.

Pour l'attelage, il s'approche du véhicule (il pourrait s'agir de l'engin de traction mais on choisit de présenter le cas où l'attelage se fait au premier véhicule). Il présente la nacelle intentionnellement si haut que le bord inférieur des organes d'appui et de choc est plus haut que le bord supérieur des tampons. Il approche la nacelle des tampons. Un capteur magnétique placé sur la nacelle (en fait, un de chaque côté) est sensible à la proximité des tampons et provoque alors la mise en marche des moteurs qui rentrent au maximum les organes d'appui et de choc en laissant saillir les plots d'appui. Le cariste présente alors la nacelle à la bonne hauteur. Un autre ensemble de deux capteurs, placés juste à côté d'un des plots d'appui de chaque plateau, détecte la proximité et provoque l'attelage de ce côté. Le cariste peut retirer ses fourches et s'éloigner. L'attelage de l'autre côté sera provoqué par le fait que, l'engin de traction s'appuyant, les deux plongeurs se rejoignent. Un capteur est sensible à ce rapprochement, qui n'était pas complet lorsque le moteur effectuait le déplacement des plongeurs, en raison de la présence de la rondelle élastomère (34). Cette détection provoque la retombée de la manille et sa rentrée dans la nacelle. Il ne reste plus qu'à assurer les connexions usuelles.

On peut bien évidemment envisager de nombreuses variantes au mode de réalisation décrit plus haut. Dans l'une d'elles, les plateaux des organes d'appui et de choc ont des butées latérales qui ne permettent qu'un déplacement limité entre les appuis et les plateaux des tampons. En revanche, le châssis est doublement articuler afin d'autoriser une déformation en losange de façon notamment à s'accommoder des déplacements latéraux importants entre les véhicules associés dans le cas d'une voie en courbe et contre-courbe. Dans une autre variante, le châssis est constitué de deux moitiés ayant entre elles des degrés de liberté en roulis et en déplacement latéral permettant à chaque moitié de rester solidaire du véhicule auquel elle est associée, quels que soient les mouvements relatifs de ces deux véhicules.

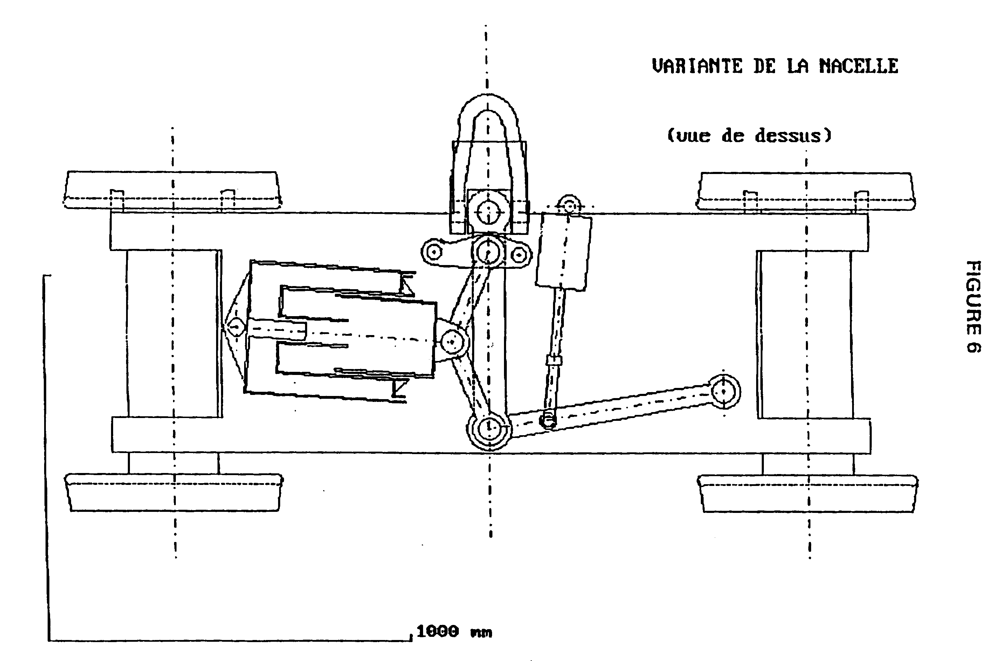

La figure 6 illustre une variante importante, qui concerne une nacelle n'offrant que le mode haut-le-pied et éventuellement celui de déplacement autonome mais n'offrant pas la possibilité d'être incorporée dans une rame entre deux véhicules. La variante concerne donc essentiellement une nacelle que l'on peut placer devant la locomotive dans le sens de la marche ou encore en queue de rame. Lorsqu'elle se trouve placée en tête de rame, on peut trouver esthétique de l'entourer d'un "nez" aérodynamique, et avantageux d'y inclure des éléments déformables dissipant de l'énergie en cas de collision. Un tel capotage, certes particulièrement bien adapté au cas d'un montage en tête de rame, peut aussi être utilisé avec les autres réalisations.

Cette variante présente un intérêt sur le plan de la conception, du dimensionnement mécanique, du coût, du poids et de l'encombrement.

La nacelle n'a en effet pas à prendre en compte l'attelage à un véhicule remorqué et de ce fait l'effort de traction, en particulier sa valeur maximale (de 1300 kN). L'effort de dimensionnement de l'attelage peut donc être réduit à celui qui est nécessaire au maintien en position d'équilibre de la nacelle en configuration haut-le-pied. Cet effort est proportionnel au poids de la nacelle et approximativement à sa longueur.

La nacelle n'a pas non plus l'obligation de prendre en compte l'effort de compression de la rame (qui en cas de choc peut atteindre 2000 kN). Un choix est toutefois ouvert entre deux attitudes. La première consiste à ne pas prendre en compte les efforts de choc, ceux-ci étant considérés comme exceptionnels et accidentels. Il est alors admis que la nacelle soit sacrifiée en cas de choc. La deuxième attitude consiste à prendre néanmoins en compte cet effort ou au moins un certain effort, que l'on est susceptible de rencontrer dans les manoeuvres courantes. C'est cette attitude qui est retenue dans la description de la nacelle selon cette variante. L'impact de ce choix sur le poids de la nacelle est d'autant plus élevé que l'on souhaite prendre en compte des efforts élevés.

La variante de la nacelle dérivée sans recherche d'optimisation de celle qui a été décrite plus haut comporte des ensembles de même nature.

Le châssis, selon la variante, est obtenu en éliminant la moitié centrale du châssis et en rapprochant les deux quarts d'extrémité. Son descriptif est analogue à celui du châssis, à l'exception des quatre boisseaux dans chacun desquels coulisse une jambe télescopique, qui ne sont plus fixés directement sur le châssis.

L'attelage est obtenu en éliminant un des deux sous-ensembles d'attelage et toutes les bielles (12) de liaison entre sous-ensembles.

La longueur et le poids du châssis de la variante étant approximativement égaux à la moitié de ceux du châssis, la force de traction nécessaire à maintenir en équilibre la nacelle en configuration haut-le-pied est de l'ordre du quart de celle nécessaire à la nacelle selon la solution principale, c'est-à-dire 30 à 40 kN. Toutefois, la prise en compte de chocs de 2000 kN implique qu'il puisse y avoir des efforts de traction parasites d'une valeur supérieure. En outre, la chute de la nacelle selon la variante serait un accident majeur puisque, la nacelle étant normalement située devant l'engin de traction, elle pourrait occasionner un déraillement. La sécurité de l'attelage est donc renforcée en le dimensionnant pour accepter un effort de traction de 100 kN. Il est pris, par ailleurs, des dispositions complémentaires de sauvegarde en cas de rupture d'attelage, mais ceci concerne les organes d'appui et de choc.

L'organe d'appui et de choc sur chaque bord est réduit à un plongeur de longueur appropriée, portant à chaque extrémité un appui.

On aurait pu penser fixer directement les appuis au châssis, faisant ainsi l'économie des plongeurs et réduisant le poids. En cas de choc frontal, le châssis aurait directement subi l'accélération du choc (plusieurs dizaines de g). C'est pourquoi, on a introduit des plongeurs, dont la présence permet de transmettre l'accélération de choc directement aux plateaux de tampons de l'engin de traction. Le châssis ne subit dans ces conditions que l'accélération due à la force de traction, c'est-à-dire moins d'une dizaine de g, car la longueur appropriée des plongeurs est telle que les appuis opposés à la locomotive n'entrent pas en contact avec le châssis. Une variante consiste toutefois à avoir un châssis supportant le choc, l'amortissement portant non pas sur le déplacement du châssis mais sur celui des charges utiles qu'il supporte.

Le profil de la coupe verticale de l'appui, du côté de l'engin de traction, est analogue à celui décrit pour la solution principale, à trois différences près. La première est que la distance entre les butées haute et basse est plus faible quoique dimensionnée pour accepter tous les plateaux des tampons des locomotives soit, avec une marge de 20 mm, 370 mm. La deuxième différence est que chaque appui est équipé d'une butée latérale vers l'axe de la voie, afin de s'opposer à tout glissement latéral excessif lors d'un choc frontal. La troisième différence est qu'afin d'accroître la sécurité d'amarrage, la butée haute de l'appui comporte un retour derrière le plateau du tampon auquel il est associé. Le but de cette modification est de maintenir la nacelle, selon la variante, en position d'équilibre de sauvegarde lors d'une perte de l'effort de traction de l'attelage, par exemple à la suite de sa rupture. Ce dispositif peut exiger une manoeuvre supplémentaire lors des opérations d'attelage.

Le profil de la coupe verticale de l'appui, du côté de l'engin de traction, est analogue à celui décrit pour la solution principale, à deux différences près. La première est qu'on a rajouté la butée latérale, formant continuité avec la butée haute et la butée basse. La deuxième est que les courbures d'extrémité ne sont plus nécessaires; elles sont remplacées par un prolongement des lignes droites inclinées à 86 degrés par rapport à l'axe longitudinal.

Du côté opposé à l'engin de traction, le profil de la coupe verticale comporte une ligne droite perpendiculaire à l'axe longitudinal, allant de la butée haute à la butée basse. La distance entre ces deux butées tient compte de l'encombrement vertical de tous les plateaux des tampons pouvant venir en contact accidentel et de la dispersion en hauteur des axes des tampons de tous les véhicules ferroviaires, cette dispersion tenant elle-même compte de l'état d'usure des bandages et de l'état de la suspension. Une ligne légèrement courbe à concavité tournée vers l'extérieur pourrait toutefois être substituée à la ligne droite précédente. Le profil de la coupe horizontale, quant à lui, comporte une ligne perpendiculaire à l'axe longitudinal, se terminant à ses extrémités par une courbure de 1500 mm de rayon.

Les jambes télescopiques, si elles existent, sont analogues à celles du module selon la réalisation préférée. En revanche, les boisseaux dans lesquels elles coulissent sont fixés sur un plateau situé sous le châssis. Ce plateau possède un axe vertical de rotation et une couronne de roulement permettant au châssis d'effectuer des rotations de 180 degrés. La raison en est que le châssis, l'attelage et les appuis ne sont plus symétriques et qu'il devient donc nécessaire d'orienter correctement le châssis selon la variante avant de l'atteler à l'engin de traction.

Une autre variante importante concerne une nacelle comprenant un seul bogie ou même seulement un bissel. On a dit précédemment que les inconvénients d'un véhicule ferroviaire traditionnel auxiliaire étaient essentiellement la longueur, le poids et le coût qui lui étaient associés. On a dit également que ces inconvénients résultaient d'une part de l'obligation de shuntage auquel sont soumis traditionnellement les véhicules et d'autre part de l'exigence d'un bon comportement, notamment à vitesse élevée, qui exclut tout risque de déraillement.

A la vérité, cette exigence de bon comportement concerne au premier chef un véhicule en rame. Dans une configuration en courbe, par exemple, un véhicule ne doit pas, en raison de sa légèreté, dérailler lorsque les véhicules qui l'encadrent le soumettent à une traction ou à une compression élevées. De même, il ne doit pas se mettre en crabe s'il se trouve dans une configuration en courbe suivie d'une contre-courbe au voisinage du point d'inflexion et si les véhicules qui l'encadrent le soumettent à une traction ou à une compression importantes.

On peut envisager un véhicule constitué d'un seul bogie ou d'un bissel sur lequel repose un châssis disposant d'une complète liberté de rotation. Cette liberté assure un guidage normal des essieux, à la différence de ce qui se passe avec un wagon à deux essieux de faible empattement, pour lesquels le maintien de la direction du wagon fait obstacle au mouvement de lacet spontané d'un essieu et pour lesquels la composante transversale des efforts de traction et de compression est retransmise aux essieux. Laisser un degré de liberté angulaire n'exclut cependant pas l'utilisation d'amortisseurs afin de réduire les oscillations de lacet et d'améliorer le comportement du bogie.

Si un tel véhicule peut être accepté en configuration haut-le-pied, parce que les efforts de traction ou de compression y sont très réduits, et tout spécialement s'il se trouve à l'arrière de l'engin de traction ou de la rame parce que les conséquences d'un éventuel déraillement y sont limitées, il ne peut toutefois sans doute pas être admis à une circulation en rame, en raison des risques de déraillement cités plus haut. Il en va différemment si ce "véhicule" lorsqu'il se trouve dans une configuration haut-le-pied repose sur son bogie et lorsqu'il se trouve dans une configuration en rame sur les attelages et tampons des véhicules encadrants.

Il va de soi que le bogie, lorsqu'il existe, constitue à lui seul les organes de roulement précédemment décrits pour le troisième mode de fonctionnement de la nacelle, à savoir un déplacement autonome à vitesse réduite dans un dépôt ou une zone de gare.

Pour résumer, lorsqu'elle se trouve dans une configuration en rame, la nacelle est suspendue comme indiqué dans le mode de réalisation préféré; lorsqu'elle se trouve dans une configuration haut-le-pied, elle repose sur son bogie et, lorsqu'elle se trouve dans une configuration de déplacement autonome, c'est ce bogie qu'elle utilise, moyennant une immobilisation angulaire du châssis dans l'axe du bogie.

Lorsque la nacelle se trouve suspendue dans une configuration en rame, deux options restent ouvertes en ce qui concerne le bogie. La première consiste à le remonter à une hauteur suffisante pour qu'il dégage le gabarit des obstacles bas ; dans ce cas, il convient d'immobiliser angulairement le bogie dans l'axe longitudinal du châssis. La seconde consiste à le laisser sur la voie, sans peser dessus mais en se contentant de l'entraîner longitudinalement. Le bogie doit disposer alors vis-à-vis du châssis (mais non de la voie 1) non seulement du degré de liberté angulaire précédemment indiqué mais également d'un degré de liberté transversal. Les amortisseurs antilacet évoqués précédemment jouent encore leur rôle d'amélioration du comportement du bogie.

Une variante de cette variante consiste à s'appuyer légèrement sur le bogie, dans les conditions qui vont être indiquées. On a dit, dans la description du mode préféré de réalisation, que le poids de la nacelle repose à la fois sur les organes d'attelage et sur les butées faisant partie des organes d'appui et de choc, dans une proportion qui varie notamment selon les véhicules qui l'encadrent, le dévers de la voie et l'angle de roulis relatif de ces véhicules, et l'effort de traction ou de compression de la rame. La variante consiste en ce que les plateaux des appuis sont dépourvus de butée leur permettant de prendre appui sur les plateaux des véhicules encadrants. La butée est reportée plus haut pour ne jouer qu'un rôle de sécurité dans le cas d'un choc important. Dans ces conditions, la nacelle repose, toujours dans une proportion variable, à la fois sur les organes d'attelage et sur le bogie. Afin de laisser au bogie la plus grande liberté de rotation, il faut que l'appui sur les bogies ne prenne que la forme d'un appui marginal sur des lisoirs, destiné à limiter le roulis de la nacelle, et que l'essentiel du poids soit supporté par les organes d'attelage.

On peut ajouter qu'en raison des conditions d'emploi de la nacelle dans lesquelles elle est presque toujours associée à un ou plusieurs véhicules ferroviaires, l'obligation de shuntage peut sans doute ne pas s'imposer. Il est alors possible de diminuer la charge à l'essieu et, en particulier, si le châssis est léger, de donner au bogie une légèreté supérieure à celle que l'on rencontre pour un bogie soumis aux obligations ferroviaires traditionnelles. Il va de soi que, si l'on a l'assurance que les efforts de traction ou de compression resteront limités, on peut même se permettre de laisser le châssis reposer sur son bogie dans une configuration en rame.

C'est en raison de sa très grande analogie avec la nacelle décrite dans le mode de réalisation préférentiel qu'on appelle encore nacelle le véhicule hybride qui vient d'être décrit.

Ce véhicule peut présenter un intérêt dans le cas où son bogie reste toujours sur les rails. Si l'on désire mesurer en sécurité la vitesse ou l'avancement de la rame, il est en effet possible d'utiliser un capteur de rotation des roues (usuellement dénommé "roue phonique"), monté sur un essieu non moteur et non freiné du bogie de la nacelle, ce qui exclut les sources d'erreur liées à l'imparfaite adhérence de la roue sur le rail. Cette utilisation peut permettre de faire l'économie d'une "centrale odométrique" coûteuse.

Ce véhicule présente un intérêt supplémentaire dans le cas où il doit servir de support à une cabine de conduite. En effet, il est possible de donner à la cabine une plus grande longueur. Dans le cas de la nacelle selon l'invention, la longueur est en effet limitée par l'obligation de ne pas sortir du gabarit dans les courbes, et notamment lorsque la nacelle se trouve en configuration haut-le-pied, configuration dans laquelle on a vu qu'elle se trouve dans le prolongement de l'engin auquel elle est arrimée. Si, en configuration haut-le-pied, la nacelle repose sur son bogie, alors le pivot de celui-ci la centre naturellement par rapport à la voie.

Le mode de réalisation préféré décrit l'a été à seule fin de faciliter la compréhension de l'invention et n'en réduit pas la portée. L'homme de l'art pourra modifier telle ou telle modalité de réalisation sans sortir du champ de l'invention.

## Revendications

1. "Nacelle" susceptible de porter des équipements voire du personnel, caractérisée en ce qu'elle peut se trouver incorporée dans une rame ferroviaire entre deux véhicules, qu'elle peut également se trouver associée à un seul véhicule ferroviaire (engin haut-le-pied ou extrémité d'une rame), qu'elle n'a d'autre contact mécanique avec ce ou ces véhicules que leurs classiques organes d'attelage ou de choc et qu'elle satisfait aux exigences usuelles de résistance aux efforts de traction et de compression, y compris les chocs, que, dans le cas général, elle n'est pas équipée de roues ferroviaires permettant son appui sur une voie ferrée, qu'en outre elle peut, d'une façon facultative être dotée de jambes télescopiques portant des galets de roulement lui permettant de circuler de façon autonome ou ce qui constitue le seul cas où elle est équipée de roues ferroviaires, être dotée d'un bogie ou d'un bissel sur lequel elle peut, dans certaines circonstances, prendre un appui partiel ou total.

2. Nacelle selon la revendication 1, caractérisée en ce que, lorsqu'elle est incorporée dans une rame, le châssis repose dans une proportion variable sur l'attelage et sur les ensembles d'appui et de choc.

3. Nacelle selon la revendication 1, caractérisée en ce que l'attelage est composé de deux sous-ensembles réunis par un tirant coulissant, chaque sous-ensemble coulissant lui-même dans une glissière faisant partie du châssis et chaque sous-ensemble portant à son extrémité externe une manille destinée à s'engager éventuellement dans le crochet d'un véhicule associé en vue de réaliser l'attelage.

4. Nacelle selon les revendications 1 et 3, caractérisée en ce qu'elle est munie de vérins (en principe élastiques) permettant d'exercer sur les deux sous-ensembles un effort de traction sensiblement constant, et de butées (éventuellement réalisées par l'alignement de bielles formant normalement un angle) assurant une élongation constante lorsque l'effort de traction appliqué dépasse celui exercé par les vérins précédents.

5. Nacelle selon les revendications 1, 3 et 4, caractérisée en ce qu'elle est munie de vérins permettant de repousser les sous-ensembles vers l'extérieur pour effectuer l'attelage.

6. Nacelle selon la revendication 1, caractérisée en ce que l'ensemble d'appui et de chocs est constitué de deux sous-ensembles (un par côté de la voie), chacun télescopique, développant une poussée relativement constante et, en configuration en rame et pour une compression dépassant la valeur de cette poussée, venant en butée et transmettant la totalité de l'effort de compression d'un véhicule associé à l'autre.

7. Nacelle selon la revendication 1, caractérisée en ce que chaque plateau d'appui comporte à sa partie supérieure une butée susceptible de venir reposer sur le bord supérieur du tampon d'un véhicule associé.

8. Nacelle selon les revendications 1 et 3, caractérisée en ce que l'ensemble d'appui et de choc est constitué de deux sous-ensembles (un par côté de la voie), chacun coulissant librement en configuration haut-le-pied dans des boisseaux (ou l'équivalent) liés au châssis et laissant le passage à des plots d'appui liés à ces boisseaux qui, lorsque le coffre est associé à un véhicule en configuration haut-le-pied, viennent au contact d'un des plateaux de tampon du véhicule associé.

9. Nacelle selon les revendications 1, 3 et 5, caractérisée en ce qu'une manille d'attelage peut être maintenue en position haute de façon à permettre le rapprochement du coffre et d'un véhicule associé, la libération pouvant être entièrement manuelle ou commandée.

10. Nacelle selon la revendication 1, caractérisée en ce que l'équipement porté est une cabine de conduite.

11. Nacelle simplifiée par rapport à celle selon la revendication 1, éventuellement dissymétrique, caractérisée en ce qu'elle n'est prévue que pour l'arrimage à un seul véhicule et bénéficie de ce fait d'un poids et d'un encombrement qui peuvent être réduits, d'un attelage n'ayant pas à résister aux efforts de traction atteignant les valeurs maximales requises de véhicules en rame, d'organes d'appui et de choc n'ayant pas à résister aux efforts de compression exigés dont la présence minimise la valeur de l'accélération à laquelle le châssis de la nacelle est soumis en cas de choc, et qui peuvent comporter des butées latérales et des butées supérieures en retour vertical.

12. Nacelle selon la revendication 11, caractérisée en ce qu'elle peut en outre circuler de façon autonome sur une voie ferrée et dispose d'un axe vertical permettant de lui donner l'orientation nécessaire pour un arrimage au véhicule associé.

13. Nacelle selon la revendication 1, caractérisée en ce qu'elle comporte un châssis et un bogie ou un bissel disposant par rapport au châssis d'un degré de liberté angulaire, et éventuellement d'amortisseurs entre les deux jouant un rôle anti-lacet.

14. Nacelle selon la revendication 13, caractérisée en ce qu'en configuration en rame le bogie ou un bissel peut être relevé de façon à dégager le gabarit des obstacles bas.

15. Nacelle selon la revendication 13, caractérisée en ce qu'en configuration en rame le bogie ou un bissel peut être laissé sur la voie mais dispose par rapport au châssis d'un degré de liberté transversal.

16. Nacelle selon la revendication 15, caractérisée en ce que les organes d'appui et de choc ne comportent pas de butée leur permettant de prendre appui sur les tampons des véhicules encadrants et en ce que l'essentiel du poids de la nacelle est supporté en configuration en rame par les organes d'attelage mais qu'un appui marginal est pris sur le bogie de façon à assurer au châssis un certain équilibre en roulis.
